# EUROPÄISCHE PATENTSCHRIFT

(11) **EP 2 687 751 B1**
(45) Veröffentlichungstag und Bekanntmachung des Hinweises auf die Patenterteilung: **29.03.2017**
(21) Anmeldenummer: 13177115.6
(22) Anmeldetag: 18.07.2013
(51) Int. Cl.: F16G 11/04, F16G 11/06

(54) **Klebeverbindung für ein Seil**
Adhesive bonding for a rope
Liaison adhésive pour un câble

(30) Priorität: 18.07.2012 DE 102012212641
(43) Veröffentlichungstag der Anmeldung: 22.01.2014
(73) Patentinhaber: Bornack GmbH & Co. KG, 74360 Ilsfeld (DE)
(72) Erfinder: Bornack, Klaus, 74395 Mundelsheim (DE); Poggel, Elmar, 74245 Löwenstein (DE)
(74) Vertreter: Dilg, Haeusler, Schindelmann Patentanwaltsgesellschaft mbH

(56) Entgegenhaltungen:
- WO-A2-2009/090411
- DE-U1-202007 005 911
- GB-A- 1 193 185
- US-A1- 2008 282 511

## Beschreibung

### Technisches Gebiet

Die vorliegende Erfindung betrifft eine Seilanordnung zum Sichern einer Person und ein Verfahren zum Herstellen einer Seilanordnung.

### Hintergrund der Erfindung

Im Bereich der Arbeitssicherheit und im Klettersport werden Personen beispielsweise an Halteseilen befestigt, um die Personen vor einem Absturz zu sichern. Dabei wird das Halteseil beispielsweise an Verbindungsstücken (z.B. Schäkel) befestigt. Die Verbindungsstücke bilden eine Kopplung des Halteseils mit einem entsprechenden Fixpunkt an einer Gehäusewand oder einer Kletterwand.

WO2009/090411 A2 und US1193185 offenbaren die aus
dem Stand der Technik bekannten Seilanordnungen.

Das Verbindungsstück kann eine Hülse aufweisen, in welcher ein Seilende des Halteseils eingeschoben wird. Anschließend wird mit einer Pressvorrichtung das Hülsenelement zusammengepresst, wodurch wiederum das Seilende in dem Hülsenelement eingepresst wird. Das Hülsenelement wird dadurch plastisch verformt, so dass nach dem Pressvorgang eine Pressverbindung zwischen dem Hülsenelement und dem Seil bestehen bleibt. Je stabiler das Hülsenelement, desto stärker kann eine Pressverbindung ausgebildet werden und desto fester ist das Seil in dem Hülsenelement befestigt.

Um allerdings ein hochstabiles Hülsenelement plastisch zu verformen, um eine robuste und starken Pressverbindung mit dem Seil herzustellen, sind große Umformkräfte notwendig. Um diese zu erzeugen sind große Pressvorrichtungen notwendig, welche nur schwer transportabel sind. Bei Defekt einer Pressverbindung zwischen dem Seil und dem Hülsenelement ist somit ständig die Pressvorrichtung vor Ort notwendig, um eine neue Pressverbindung zwischen dem Seil und dem Hülsenelement herzustellen. Dies erschwert eine Reparatur der Pressverbindung im Einsatzgebiet, das heißt vor Ort an einer Kletterwand oder an einer Gebäudewand.

### Darstellung der Erfindung

Es ist eine Aufgabe der vorliegenden Erfindung, eine einfache Seilverbindung mit einem Hülsenelement bereitzustellen.

Diese Aufgabe wird mit einer Seilanordnung zum Sichern einer Person und mit einem Verfahren zum Herstellen einer Seilanordnung gemäß den unabhängigen Ansprüchen gelöst.

Gemäß eines ersten Aspekts der vorliegenden Erfindung wird eine Seilanordnung zum Sichern einer Person beschrieben. Die Seilanordnung weist ein Hülsenelement mit einer Aufnahmeöffnung, ein Seil mit einem Endabschnitt und ein Klebemittel auf. Der Endabschnitt des Seils ist in der Aufnahmeöffnung angeordnet. Das Klebeelement ist in der Aufnahmeöffnung angeordnet, um eine Klebeverbindung zwischen dem Seil und dem Hülsenelement bereitzustellen.

Das Hülsenelement kann beispielsweise ein Teil eines Verbindungsstücks, wie z.B. eines Schäkels sein, welcher an einem Sitzgurt oder an einem anderen Sicherungselement variabel angeordnet werden kann.

Das Seil kann beispielsweise einen runden Querschnitt oder einen bandförmigen Querschnitt aufweisen. Ferner kann das Seil ein Drahtseil sein.

Darüber hinaus kann das Seil aus Verbundfasern oder aus Naturfasern bestehen.

Das Klebemittel ist beispielsweise ein Kleber, welcher während der Herstellungsphase flüssig vorliegt und nach einem Aushärten fest vorliegt. Das Klebemittel kann durch Flächenhaftung, das heißt durch Adhäsion oder durch Kohäsion die Klebeverbindung zwischen dem Seil und dem Hülsenelement bereitstellen. Adhäsion bedeutet, dass das Seil und das Hülsenelement mittels Haftkräften miteinander verbunden sind. Bei der Kohäsion werden chemische Verbindungen zwischen dem Klebstoff und entsprechend dem Hülsenelement und/oder dem Seil hergestellt. Das Klebemittel kann beispielsweise ein Zweikomponentenkleber sein. Bei Zweikomponentenklebstoffen weist eine Komponente Harzmonumere bzw. Binder auf, während die andere Komponente einen Härter aufweist. Alternativ können Einkomponentenkleber, wie zum Beispiel Einkomponenten-Expositharzklebstoff als Klebemittel eingesetzt werden.

Ferner kann ein Klebemittel eingesetzt werden, welches quellende Eigenschaften bei Trocknung aufweist. Dies bedeutet, dass das Klebemittel im flüssigen Zustand weniger Volumen aufweist als im ausgehärteten Zustand. Mit anderen Worten quillt das Klebemittel während des Aushärtens auf, so dass neben der Klebeverbindung auch eine Pressverbindung zwischen dem Hülsenelement, dem ausgehärteten Klebemittel und dem Seil hergestellt wird.

Ferner ist das Klebemittel ein thermisch härtendes Klebemittel. Ein thermisch härtendes Klebemittel härtet bei Anwendung einer bestimmten Temperatur, zum Beispiel bei einer Temperatur von über 30°, insbesondere bei einer Temperatur von über 50° oder über 100°, aus. Zudem kann das thermisch härtende Klebemittel ein anaerobes Klebemittel sein, bei welchem eine Härtung auch bei Ausschluss von Luft bzw. Luftsauerstoff, insbesondere bei hoher Temperatur, erzielt wird.

Die Anwendung eines solchen thermisch härtenden Klebemittels führt dazu, dass der Endabschnitt des Seils in die Aufnahmeöffnung des Hülsenelements eingeführt werden kann, ohne dass Luftspalte oder andere Luftversorgung zum Aushärten des Klebemittels notwendig ist. Mit anderen Worten kann in der Aufnahmeöffnung ausschließlich der Endabschnitt und das Klebemittel eingebracht werden, ohne dass ein Einschluss von Luft zum Aushärten notwendig ist.

In einer weiteren beispielhaften Ausführungsform ist das Hülsenelement derart ausgebildet, dass die Aufnahmeöffnung ein zylindrisches Profil aufweist. Mit anderen Worten weist die Aufnahmeöffnung gerade kein konisches Profil auf. Das Seil kann mit dem Endabschnitt in die Aufnahmeöffnung eingeschoben werden und das Klebemittel bildet eine stoffliche und reibschlüssige Verbindung zwischen dem Endabschnitt des Seils und dem Hülsenelement auf. Das Klebemittel bildet somit insbesondere keine formschlüssige Verbindung aus, bei welcher das Klebemittel beispielsweise in einer keilförmigen Aufnahmeöffnung einen Pfropfen bildet, womit ein Herausziehen des Seils unterbunden wird. Das Hülsenelement mit einer zylindrischen Aufnahmeöffnung kann in einfacher Art und Weise hergestellt werden.

Das Seil weist im Endabschnitt eine raue Oberfläche auf. Gemäß der vorliegenden Erfindung, ist der Endabschnitt des Seils dazu (z.B. mechanisch oder chemisch) aufgerauht.

Anschließend kann das Klebemittel auf die aufgeraute Oberfläche des Seils aufgebracht werden oder direkt in die Aufnahmeöffnung eingefüllt werden und der Endabschnitt in die Aufnahmeöffnung des Hülsenelements eingebracht werden. Wenn als Klebemittel das oben beschriebene thermisch härtende Klebemittel eingesetzt wird, ist ein Lufteinschluss zur Aushärtung in der Aufnahmeöffnung nicht notwendig. Anschließend kann die Seilanordnung beispielsweise in einen Ofen eingelegt werden, so dass das Hülsenelement mit dem Endabschnitt des Seils zur Aushärtung des Klebemittels beheizt wird.

Aufgrund des Einsatzes des thermisch aushärtbaren Klebemittels ist keine Luft in der Hülse und keine Bereitstellung von Mikrospalten zum Bereitstellen von Luft notwendig.

Mit der Seilanordnung gemäß der vorliegenden Erfindung kann schnell und zuverlässig eine Seilverbindung zwischen einem Seil und einem Hülsenelement hergestellt werden, ohne dass schwer zu transportierende Herstellvorrichtungen, wie beispielsweise Pressvorrichtungen, zum Deformieren des Hülsenelements mittransportiert werden müssen. Am Einsatzort kann schnell und einfach das Klebemittel in die Aufnahmeöffnung eingefüllt werden und das Seil in die Aufnahmeöffnung hinein geschoben werden. Nach Aushärten des Klebemittels ist eine feste und sichere Seilverbindung geschaffen, ohne dass schwere und teure Herstellvorrichtungen mitgeführt werden müssen. Somit kann eine Seilanordnung auch schnell am Einsatzort repariert werden. Beispielsweise kann bei Riss des Seils das Restseil und das Klebemittel mittels eines Lösungsmittels oder mittels Auskratzens aus der Aufnahmeöffnung des Hülsenelements entfernt werden. Anschließend kann ein neuer Endabschnitt des Seils in die Aufnahmeöffnung eingeführt werden und mittels eines Klebemittels verklebt werden.

In einer weiteren beispielhaften Ausführungsform weist die Aufnahmeöffnung ein konisches Profil auf.

In einer weiteren beispielhaften Ausführungsform ist das konische Profil der Aufnahmeöffnung derart ausgebildet, dass ein erster Öffnungsquerschnitt der Aufnahmeöffnung im Bereich eines freien Endes des Endabschnitts des Seils größer ist als ein zweiter Öffnungsquerschnitt der Aufnahmeöffnung an einem gegenüberliegenden dem freien Ende des Endabschnitts liegenden Bereich des Endabschnitts des Seils. Mit anderen Worten ist der zweite Öffnungsquerschnitt an dem Eingang der Aufnahmeöffnung kleiner als der erste Öffnungsquerschnitt im Inneren der Aufnahmeöffnung. Der Klebstoff in der Aufnahmeöffnung ist nach dem Aushärten entsprechend dem konischen Profils konisch bzw. keilförmig ausgebildet. Das Klebemittel bildet im ausgehärteten Zustand somit einen Pfropfen, welcher nicht durch den zweiten Öffnungsquerschnitt am Eingang der Aufnahmeöffnung hinausgeschoben werden kann. Somit wird eine festere Verbindung zwischen dem Seil, dem ausgehärteten Klebemittel und dem Hülsenelement geschaffen.

Gemäß einer weiteren beispielhaften Ausführungsform weist die Seilanordnung ferner einen Bolzen auf, welcher derart angeordnet ist, dass der Bolzen durch das Hülsenelement und durch den Endabschnitt des Seils geführt ist. Durch Einsatz des Bolzens wird eine zusätzliche Sicherheitsvorkehrung eingeführt. Der Bolzen wird sozusagen durch die äußere Wandung des Hülsenelements und durch das Seil hindurchgesteckt. Somit bildet neben dem Klebemittel der Bolzen eine zusätzliche Befestigung zwischen dem Seil und dem Hülsenelement.

Gemäß einer weiteren beispielhaften Ausführungsform weist die Seilanordnung ein Keilelement auf, welches von einem freien Ende des Endabschnitts des Seils entlang einer Seilmittellinie des Seils in das Seil derart eingetrieben ist und hineinverläuft, dass in einem Bereich des Endabschnitts eine Aufweitung eines Durchmessers des Seils ausgebildet ist. Wird das Keilelement entlang der Seilmittellinie von dem freien Ende in das Seil hineingetrieben, so entsteht ein Wulst bzw. ein konischer Endabschnitt des Seils am freien Ende. Insbesondere kann der Durchmesser am Endabschnitt mittels des Keilelements derart aufgeweitet werden, dass beispielsweise der Durchmesser des Seils in dem aufgeweiteten Bereich größer ist als der zweite Öffnungsquerschnitt der Aufnahmeöffnung. Somit kann ein Lösen des Seils bzw. ein Herausschieben des Seils aus der Aufnahmeöffnung verhindert werden.

Beispielsweise kann das Seil in die Aufnahmeöffnung, welche eine konische Profilform aufweist, zunächst hineingeschoben werden. Anschließend kann das Seil in der Aufnahmeöffnung wie gewünscht positioniert werden. Vor oder nach dem Einbringen des Klebemittels in die Aufnahmeöffnung kann das Keilelement durch eine weitere Öffnung im Hülsenelement hindurchgeschoben werden und mittels Drückens oder Hämmerns in das freie Ende des Seils eingetrieben werden, um das Seil aufzuweiten.

Gemäß einer weiteren beispielhaften Ausführungsform sind die Aufnahmeöffnung und das Seil derart ausgebildet, dass zwischen dem Endabschnitt des Seils und dem Hülsenelement in der Aufnahmeöffnung ein Spalt ausgebildet ist. Der Spalt kann beispielsweise einen Abstand zwischen dem Endabschnitt und dem Hülsenelement von ungefähr 0,2 mm bis ungefähr 0,5 mm aufweisen. Somit wird sichergestellt, dass ausreichend Raum gebildet wird, in welchem das Klebemittel einführbar ist. Insbesondere wird dadurch sichergestellt, dass das Klebemittel fast oder völlig das Seil umgibt, so dass eine feste Klebeverbindung und somit eine robuste Seilanordnung bereitstellbar ist.

Gemäß einer weiteren beispielhaften Ausführungsform weist das Hülsenelement in der Aufnahmeöffnung eine Kontrollmarkierung auf, welche die Befüllmenge des Klebemittels in der Aufnahmeöffnung angibt. Die Kontrollmarkierung kann beispielsweise mittels einer Rille oder mit einer farblichen Markierung in der Aufnahmeöffnung angeordnet werden. Alternativ oder zusätzlich kann die Kontrollmarkierung mittels einer Überlaufbohrung ausgebildet werden, welche in der Wandung des Hülsenelements ausgebildet ist und welche das innere Volumen der Aufnahmeöffnung mit der Umgebung verbindet. Wird das Klebemittel in einem flüssigen Zustand in die Aufnahmeöffnung eingebracht, so tritt das Klebemittel durch die Überlaufbohrung aus, wenn ein gewünschter Füllstand des Klebemittels in der Aufnahmeöffnung erreicht ist.

Gemäß einer weiteren beispielhaften Ausführungsform weist der Endabschnitt des Seils eine weitere Kontrollmarkierung auf, welche die Einschubtiefe des Endabschnitts in die Aufnahmeöffnung angibt. Die weitere Kontrollmarkierung kann beispielsweise eine farbliche Markierung an dem Seil sein. Ferner kann die weitere Kontrollmarkierung ein Ringelement darstellen, welches an dem Seil an einer entsprechenden Position angeordnet ist.

Gemäß der vorliegenden Erfindung weist das Hülsenelement in der Aufnahmeöffnung eine aufgeraute Oberfläche, insbesondere eine geriffelte oder beschichtete Oberfläche, auf. Der Reibkoeffizienten zwischen dem Klebemittel und der Aufnahmeöffnung wird mittels der aufgerauten Oberfläche des Hülsenelements in der Aufnahmeöffnung erhöht, sodass eine stärker haftende Klebeverbindung ausgebildet wird.

Die aufgeraute Oberfläche wird insbesondere mittels einer Profilierung, wie beispielsweise einem Gewinde (bzw. einer Gewinderiffelung), geschaffen. Gemäß eines weiteren Aspekts der vorliegenden Erfindung wird ein Verfahren zum Herstellen einer Seilanordnung beschrieben. Zunächst werden ein Hülsenelement mit einer Aufnahmeöffnung und ein Seil mit einem Endabschnitt bereitgestellt. Anschließend wird die Aufnahmeöffnung mit einem Klebemittel befüllt und der Endabschnitt des Seils in der Aufnahmeöffnung angeordnet, so dass eine Klebeverbindung zwischen dem Seil und dem Hülsenelement erzeugt wird. Alternativ kann der Endabschnitt vor dem Befüllen der Aufnahmeöffnung mit einem Klebemittel in der Aufnahmeöffnung angeordnet werden.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Figuren näher beschrieben. Es zeigen:
Fig. 1 eine schematische Darstellung einer Seilanordnung gemäß einer beispielhaften Ausführungsform der vorliegenden Erfindung; und
Fig. 2 eine schematische Darstellung einer Seilanordnung gemäß einer beispielhaften Ausführungsform der vorliegenden Erfindung, wobei die Aufnahmeöffnung eine konische Profilform aufweist.

### Detaillierte Beschreibung von exemplarischen Ausführungsformen

Gleiche oder ähnliche Komponenten sind in den Figuren mit gleichen Bezugsziffern versehen. Die Darstellungen in den Figuren sind schematisch und nicht maßstäblich.

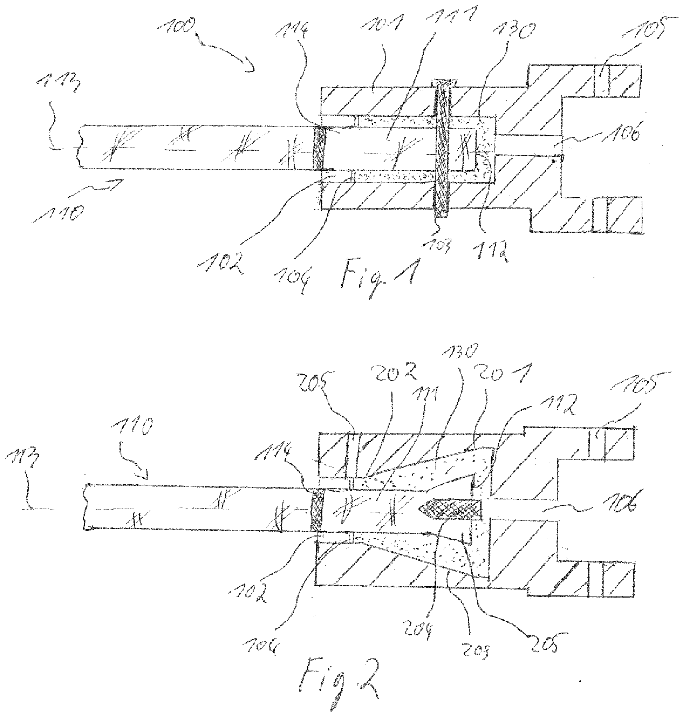

**Fig. 1** zeigt eine Seilanordnung 100 zum Sichern einer Person. Die Seilanordnung 100 weist ein Hülsenelement 101 mit einer Aufnahmeöffnung 102 und ein Seil 110 mit einem Endabschnitt 111 auf. Der Endabschnitt 111 ist in der Aufnahmeöffnung 102 angeordnet. Ein Klebemittel 130 ist in der Aufnahmeöffnung 102 angeordnet, um eine Klebeverbindung zwischen dem Seil 110 und dem Hülsenelement 101 bereitzustellen.

Das Hülsenelement 101 ist beispielsweise ein Schäkel, mit welchem das Seil 110 an einem beliebigen Gegenstand, wie beispielsweise an einem Fixierungselement einer Kletterwand, Gebäudewand oder beispielsweise an einen Sitzgurt einer Person befestigt werden kann. Das Hülsenelement 101 weist dazu zum Beispiel eine Bohrung 105 auf, durch welche ein Verbindungsbolzen eingeführt werden kann.

Der Endabschnitt 111 des Seils 110 beschreibt den Abschnitt des Seils, welcher in die Aufnahmeöffnung 102 hineinragt. Der Endabschnitt 111 des Seils kann beispielsweise eine Länge von ungefähr 100 mm bis ungefähr 250 mm, insbesondere ungefähr 150 mm bis ungefähr 200 mm, aufweisen. Ferner ist die Aufnahmeöffnung 102 größer als der Seildurchmesser des Seils 110 ausgebildet, so dass ein Abstand zwischen dem Seil 110 und der Aufnahmeöffnung 102 von ca. 0,1 mm bis ungefähr 0,6 mm, insbesondere 0,2 mm bis ungefähr 0,5 mm entsteht. Dadurch kann das Klebemittel 130 homogen und konstant den Endabschnitt 111 des Seils 110 umgeben, so dass eine robuste Klebeverbindung zwischen dem Seil 110 und dem Hülsenelement 101 hergestellt wird. Zur Positionierung des Endabschnitts 111 in der Aufnahmeöffnung 102 kann durch eine Durchführung 106 im Hülsenelement 101 eine Haltevorrichtung, wie beispielsweise ein Haltestab, durchgeführt werden, um den Endabschnitt 111 konstant beabstandet zu dem Hülsenelement 101 zu fixieren, insbesondere während das Klebemittel eingefüllt wird und ausgehärtet wird.

Zur zusätzlichen Sicherung der Verbindung zwischen dem Seil 110 und dem Hülsenelement 101 kann ein Bolzen 103 durch das Hülsenelement 101 und durch das Seil 110 im Endabschnitt 111 geführt werden.

Insbesondere kann in das Hülsenelement 101 eine erste Bohrung und eine zweite Bohrung eingebracht werden, wobei sich die erste Bohrung und die zweite Bohrung jeweils von der Umgebung des Hülsenelements 101 in die Aufnahmeöffnung 102 erstrecken. Die erste Bohrung und die zweite Bohrung sind dabei insbesondere um eine Mittellinie des Hülsenelements 101 bzw. um die Seilmittellinie 113 beanstandet zueinander in dem Hülsenelement 101 ausgebildet. Durch die erste Bohrung und die zweite Bohrung kann jeweils ein Fixierungselement, wie beispielsweise ein Fixierungsbolzen, hindurchgeschoben werden, so dass das Seil 110 in einer bestimmten Position innerhalb der Aufnahmeöffnung 102 zwischen den jeweiligen Fixierungselementen räumlich fixiert vorliegt. Die Fixierungselemente können in den jeweiligen Bohrungen vorliegen, bis das Klebemittel 130 ausgehärtet ist und das Seil 110 entsprechend mittels des ausgehärteten Klebemittels 130 räumlich fixiert ist. Nach dem Aushärten des Klebemittels 130 können die Fixierungselemente aus den Bohrungen entfernt werden.

In einer weiteren beispielhaften Ausführungsform kann die erste Bohrung und/oder die zweite Bohrung ein Gewinde aufweisen, so dass entsprechende Gewindeschrauben als Fixierungselemente in die erste Bohrung und die zweite Bohrung eingeschraubt werden können bis die Gewindeschrauben das Seil 110 zwischen einander einspannen. Bevorzugt können als Gewindeschrauben beispielsweise sogenannte Madenschrauben verwendet werden.

In einer beispielhaften Ausführungsform des Herstellerverfahrens kann in dem Verfahrensschritt Anordnen des Endabschnitts 111 des Seils 110 in der Aufnahmeöffnung 102 zunächst das Seil 110 bzw. dessen Endabschnitt 111 in der Aufnahmeöffnung 102 mittels der Fixierungselemente räumlich fixiert werden. Anschließend kann das Hülsenelement 101 mit dem Seil 110 in einem Ofen erwärmt werden, so dass ein thermisch aushärtendes Klebemittel 130 in dem Ofen aushärtet. Anschließend kann das Hülsenelement 101 mitsamt dem Seil 110 aus dem Ofen entnommen werden und die Fixierungselemente aus den jeweiligen Bohrungen entnommen werden.

Ferner kann eine Kontrollmarkierung 104 in der Aufnahmeöffnung 102 angeordnet werden. Die Kontrollmarkierung 104 zeigt einen idealen Füllstand des Klebemittels 130 in der Aufnahmeöffnung 102 an. Die Kontrollmarkierung 104 kann beispielsweise eine Rille oder ein Farbring sein, welcher von außerhalb der Aufnahmeöffnung 102 gut wahrnehmbar ist.

Entsprechend kann an dem Seil 110 eine weitere Kontrollmarkierung 114 angeordnet sein, welche den Endabschnitt 111 zwischen einem freien Ende 112 des Seils 110 entlang der Seilmittellinie 113 und der weiteren Kontrollmarkierung 114 eingrenzt. Die weitere Kontrollmarkierung 114 kann beispielsweise ein Farbring sein, welcher das Seil 110 entsprechend umhüllt.

Ferner kann an dem freien Ende 112 des Seils 110 ein Keilelement 204 (Siehe Fig. 2) entlang der Seilmittellinie 113 eingebracht werden, um eine Aufweitung des Seils 110 zu erzeugen.

In Fig. 1 kann als Klebemittel 130 ein thermisch aushärtbares Klebemittel 130 eingesetzt werden. Die Aufnahmeöffnung 102 weist eine zylindrische Profilform auf. Der Endabschnitt 111 des Seils 110 ist mittig in die Aufnahmeöffnung 102 eingeschoben. Der Raum zwischen dem Endabschnitt 111 und der Innenfläche des Hülsenelements 101 innerhalb der Aufnahmeöffnung 102 wird mit dem Klebemittel 130 gefüllt. Durch das Einfüllen des Klebemittels 130 entweicht Luft innerhalb der Aufnahmeöffnung 102 vollständig.

Zur Aushärtung des thermisch aushärtbaren Klebemittels 130 wird die Seilanordnung 100 beispielsweise in einem Ofen erhitzt so dass das thermisch aushärtende Klebemittel 130 aushärtet und eine Klebeverbindung zwischen dem Endabschnitt 111 und dem Hülsenelement 101 erzeugt wird. Mittels des thermisch aushärtbaren Klebemittels 130 wird ausschließlich eine stoffliche Verbindung bzw. eine reibschlüssige Verbindung zwischen dem Endabschnitt 111 und dem Hülsenelement 101 geschaffen, ohne dass eine formschlüssige Verbindung notwendig ist. Ferner ist es nicht notwendig, das Seil 110 aufzuspalten bzw. aufzuspreizen, um eine formschlüssige Verbindung zu erzielen. Das Seil 110 kann unbehandelt, außer einer möglichen Aufrauhung der Oberfläche, mit dem Hülsenelement verklebt werden. Damit wird das Seil 110 in seiner Struktur nicht mechanisch instabil und liegt in der Seilanordnung 100 sehr robust vor.

**Fig. 2** zeigt eine weitere beispielhafte Ausführungsform der vorliegenden Seilanordnung 100. Die Seilanordnung 100 in Fig. 2 kann dieselben Merkmale wie die Seilanordnung 100 aus Fig. 1 aufweisen. So kann die Seilanordnung 100 aus Fig. 2 ebenfalls einen nicht dargestellten Bolzen 103 zur zusätzlichen Fixierung des Seils 110 an dem Hülsenelement 101 aufweisen.

In Fig. 2 ist die Aufnahmeöffnung 102 mit einem konischen Profil 203 ausgebildet. Insbesondere ist das konische Profil 203 derart ausgebildet, dass ein erster Öffnungsquerschnitt 201 der Aufnahmeöffnung 102 im Bereich des freien Endes 112 des Endabschnitts 111 größer ist als ein zweiter Öffnungsquerschnitt 202. Der zweite Öffnungsquerschnitt 202 der Aufnahmeöffnung 101 liegt entlang der Seilmittellinie 113 an einem zu dem freien Ende 112 gegenüberliegenden Ende des Endabschnitts 111 des Seils 110. Mit anderen Worten ist der zweite Öffnungsquerschnitt 202 am Eingang der Aufnahmeöffnung 102 kleiner als ein erster Öffnungsquerschnitt 201 im Inneren der Aufnahmeöffnung 102.

Die Aufnahmeöffnung 102 weist ferner eine konische Profilform 203 auf. Die konische Profilform 203 der Aufnahmeöffnung 102 ist derart ausgebildet, dass ein erster Öffnungsquerschnitt 201 der Aufnahmeöffnung 102 im Bereich eines freien Endes 112 des Endabschnitts 111 des Seils 110 größer ist als ein zweiter Öffnungsquerschnitt 202 der Aufnahmeöffnung 102 an einem gegenüberliegenden dem freien Ende 112 des Endabschnitts 111 liegenden Bereich des Endabschnitts des Seils 110. Mit anderen Worten ist der zweite Öffnungsquerschnitt 202 an dem Eingang der Aufnahmeöffnung 102 kleiner als der erste Öffnungsquerschnitt 201 im Inneren der Aufnahmeöffnung 102. Das Klebemittel 130 bildet im ausgehärteten Zustand somit einen Pfropfen, welcher nicht durch den zweiten Öffnungsquerschnitt 202 am Eingang der Aufnahmeöffnung 102 hinausgeschoben werden kann.

Ferner kann an dem Hülsenelement 101 im Bereich der Kontrollmarkierung 104 eine Überlaufbohrung 205 ausgebildet werden. Die Überlaufbohrung 205 stellt den gewünschten Füllstand des Klebemittels 130 in der Aufnahmeöffnung 102 ein. Wird beispielsweise zu viel Klebemittel 130 in die Aufnahmeöffnung 102 eingebracht, so fließt das überschüssige Klebemittel 130 durch die Überlaufbohrung 205 hinaus. Während des Einfüllens des Klebemittels 130 kann beispielsweise die optionale Durchführung 106 geschlossen werden.

Durch die Durchführung 106 kann ferner das Keilelement 204 in Richtung Seil 110 eingebracht werden. Befindet sich der Endabschnitt 111 bereits in der Aufnahmeöffnung, so kann beispielsweise das Keilelement 204 durch die Durchführung 106 eingebracht werden. Das Keilelement 204 kann insbesondere an dem freien Ende 112 des Seils 110 entlang der Seilmittellinie 113 eingetrieben werden, um eine Aufweitung des Seildurchmessers des Seils 110 am freien Ende 112 zu erzeugen. Die Aufweitung kann beispielsweise größer als der zweite Öffnungsquerschnitt 202 sein, so dass ein Herausziehen des Seils 110 aus der Aufnahmeöffnung 102, beispielsweise bei Versagen der Klebeverbindung 130, verhindert wird.

Die Aufnahmeöffnung 102 weist eine Mittelachse auf. Die Seilmittellinie 113 ist insbesondere bei eingeführtem Seil koaxial mit der Mittelachse der Aufnahmeöffnung 102. Entlang einer Verlängerung der Mittelachse der Aufnahmeöffnung 102 wird die Durchführung 106 ausgebildet, so dass das Keilelement 204 entlang der Seilmittellinie 113 in das freie Ende 112 des Endabschnitts 111 eingetrieben werden kann und eine gewünschte Aufweitung entsteht.

Wie in Fig. 1 und Fig. 2 dargestellt, kann in einfacher Art und Weise die Seilanordnung 100 hergestellt werden. Im Folgenden wird das einfache Herstellverfahren kurz zusammengefasst:
Das Hülsenelement 101 mit der Aufnahmebohrung 102 und das Seil 110 mit einem Endabschnitt 111 wird bereitgestellt und der Endabschnitt 111 wird in der Aufnahmeöffnung 102 platziert. Vor oder nach dem Anordnen wird die Aufnahmeöffnung 102 mit dem Klebemittel 130 befüllt. Nach dem Aushärten des Klebemittels 130 entsteht eine Klebeverbindung zwischen dem Seil 110 und dem Hülsenelement 101.

Vor dem Aushärten des Klebemittels 130 kann das Keilelement 204 in das freie Ende 112 entlang der Seilmittellinie 113 eingebracht werden. Ebenfalls vor dem Aushärten des Klebemittels 130 kann zur zusätzlichen Sicherung der Bolzen 103 eingeführt werden.

Das Klebemittel 130 wird bis zu der Kontrollmarkierung 104 in die Aufnahmeöffnung 102 eingefüllt. Ferner wird das Seil 110 in die Aufnahmeöffnung 102 eingeschoben, bis beispielsweise die weitere Kontrollmarkierung 114 des Seils 110 den Eingang der Aufnahmeöffnung 102 erreicht hat. Damit wird sichergestellt, dass das Seil 110 mit einem ausreichend langen Endabschnitt 111 in der Aufnahmeöffnung 102 eingeführt ist, um eine sichere Klebeverbindung herzustellen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: Seilanordnung
- 101: Hülsenelement
- 102: Aufnahmeöffnung
- 103: Bolzen
- 104: Kontrollmarkierung
- 105: Bohrung
- 106: Durchführung

- 110: Seil
- 111: Endabschnitt
- 112: freies Ende
- 113: Seilmittellinie
- 114: weitere Kontrollmarkierung

- 130: Klebemittel

- 201: erster Öffnungsquerschnitt
- 202: zweiter Öffnungsquerschnitt
- 203: konische Profilform
- 204: Keilelement
- 205: Überlaufbohrung

## Patentansprüche

1. Seilanordnung (100) zum Sichern einer Person, aufweisend
ein Hülsenelement (101) mit einer Aufnahmeöffnung (102),
ein Seil (110) mit einem Endabschnitt (111),
wobei der Endabschnitt (111) in der Aufnahmeöffnung (102) angeordnet ist,
ein Klebemittel (130), welches in der Aufnahmeöffnung (102) angeordnet ist, um eine Klebeverbindung zwischen dem Seil (110) und dem Hülsenelement (101) bereitzustellen,
wobei das Hülsenelement (101) in der Aufnahmeöffnung (102) eine aufgeraute Oberfläche
**dadurch gekennzeichnet, dass**
der Endabschnitt (111) mechanisch oder chemisch aufgeraut ist, und wobei mittels der Klebeverbindung eine stoffliche und reibschlüssige Verbindung zwischen dem Endabschnitt (111) und dem Hülsenelement (101) ausgebildet ist.

2. Seilanordnung (100) gemäß Anspruch 1,
wobei die Aufnahmeöffnung (102) ein zylinderförmiges Profil (203) aufweist.

3. Seilanordnung (100) gemäß Anspruch 1,
wobei die Aufnahmeöffnung (102) ein konisches Profil (203) aufweist.

4. Seilanordnung (100) gemäß Anspruch 3,
wobei das konische Profil (203) der Aufnahmeöffnung (102) derart ausgebildet ist, dass ein erster Öffnungsquerschnitt (201) der Aufnahmeöffnung (102) im Bereich eines freien Endes (112) des Endabschnitts (111) des Seils (110) größer ist als ein zweiter Öffnungsquerschnitt (202) der Aufnahmeöffnung (102) an einem gegenüber dem freien Ende (112) des Endabschnitts (111) liegendem Bereich des Endabschnitts (111) des Seils (110).

5. Seilanordnung (100) gemäß einem der Ansprüche 1 bis 4, ferner aufweisend
einen Bolzen (103), welcher derart angeordnet ist, dass der Bolzen (103) durch das Hülsenelement (101) und durch den Endabschnitt (111) des Seils (110) geführt ist.

6. Seilanordnung (100) gemäß einem der Ansprüche 1 bis 5, ferner aufweisend
ein Keilelement, welches von einem freien Ende (112) des Endabschnitts (111) entlang einer Seilmittellinie (113) des Seils (110) in das Seil (110) derart hinein verläuft, dass in einem Bereich des Endabschnitts (111) eine Aufweitung eines Durchmessers des Seils (110) ausgebildet ist.

7. Seilanordnung (100) gemäß einem der Ansprüche 1 bis 6,
wobei das Klebemittel (130) einen Zwei-Komponenten-Kleber und/oder ein Harz aufweist.

8. Seilanordnung (100) gemäß einem der Ansprüche 1 bis 7,
wobei das Klebemittel (130) ein thermisch aushärtendes Klebemittel aufweist.

9. Seilanordnung (100) gemäß einem der Ansprüche 1 bis 8,
wobei die Aufnahmeöffnung (102) und das Seil (110) derart ausgebildet sind, dass zwischen dem Endabschnitt (111) des Seils (110) und dem Hülsenelement (101) in der Aufnahmeöffnung (102) ein Spalt ausgebildet ist,
wobei der Spalt insbesondere einen Abstand zwischen Endabschnitt (111) und Hülsenelement (101) von 0,2 mm bis 0,5 mm aufweist.

10. Seilanordnung (100) gemäß einem der Ansprüche 1 bis 9,
wobei das Hülsenelement (101) in der Aufnahmeöffnung (102) eine Kontrollmarkierung (104) aufweist, welche die Befüllmenge des Klebemittels (130) in der Aufnahmeöffnung (102) angibt.

11. Seilanordnung (100) gemäß einem der Ansprüche 1 bis 10,
wobei das Hülsenelement (101) eine erste Bohrung und eine zweite Bohrung aufweist,
wobei sich die erste Bohrung und die zweite Bohrung von der Umgebung des Hülsenelements (101) in die Aufnahmeöffnung (102) erstrecken,
wobei die erste Bohrung und die zweite Bohrung voneinander beanstandet sind, wobei die erste Bohrung und die zweite Bohrung derart ausgebildet sind, dass durch die erste Bohrung und die zweite Bohrung jeweils ein Fixierungselement hindurchschiebbar sind, so dass der Endabschnitt (111) des Seils (110) in einer vorbestimmten Position innerhalb der Aufnahmeöffnung (102) zwischen den jeweiligen Fixierungselementen räumlich fixierbar ist.

12. Seilanordnung (100) gemäß einem der Ansprüche 1 bis 11,
wobei der Endabschnitt (111) des Seils (110) eine weitere Kontrollmarkierung (114) aufweist, welche die Einschubtiefe des Endabschnitts (111) in die Aufnahmeöffnung (102) angibt.

13. Seilanordnung (100) gemäß einem der Ansprüche 1 bis 12,
wobei die aufgeraute Oberfläche eine geriffelte oder beschichtete Oberfläche ist.

14. Verfahren zum Herstellen einer Seilanordnung (100), das Verfahren aufweisend
Bereitstellen eines Hülsenelements (101) mit einer Aufnahmeöffnung (102),
wobei das Hülsenelement (101) in der Aufnahmeöffnung (102) eine aufgeraute Oberfläche aufweist,
Bereitstellen eines Seils (110) mit einem Endabschnitt (111),
wobei der Endabschnitt (111) mechanisch oder chemisch aufgeraut ist,
Befüllen der Aufnahmeöffnung (102) mit einem Klebemittel (130), und
Anordnen des Endabschnitts (111) in der Aufnahmeöffnung (102), so dass eine Klebeverbindung zwischen dem Seil (110) und dem Hülsenelement (101) erzeugt wird,
wobei mittels der Klebeverbindung eine stoffliche und reibschlüssige Verbindung zwischen dem Endabschnitt (111) und dem Hülsenelement (101) ausgebildet wird.

15. Verfahren gemäß Anspruch 14,
wobei das Klebemittel (130) ein thermisch aushärtendes Klebemittel aufweist, wobei das Verfahren ferner aufweist
Erwärmen des Endabschnitts (111) in der Aufnahmeöffnung (102), sodass das thermisch aushärtende Klebemittel aushärtet.

## Claims

1. Rope arrangement (100) for securing a person, comprising
a sleeve element (101) with a receiving opening (102),
a rope (110) with an end portion (111),
wherein the end portion (111) is arranged in the receiving opening (102),
an adhesive (130) arranged in the receiving opening (102) for providing an adhesive joint between the rope (110) and the sleeve element (101),
wherein the sleeve element (101) in the receiving opening (102) has a roughened surface,
**characterized in that**
the end portion (111) is mechanically or chemically roughened, and
wherein a materially and frictionally engaged connection is formed between the end portion (111) and the sleeve element (101) by the adhesive joint.

2. Rope arrangement (100) according to claim 1,
wherein the receiving opening (102) comprises a cylinder shaped profile (203).

3. Rope arrangement (100) according to claim 1,
wherein the receiving opening (102) comprises a conical profile (203).

4. Rope arrangement (100) according to claim 3,
wherein the conical profile (203) of the receiving opening (102) is formed in such a manner, that a first opening cross section (201) of the receiving opening (102) in the range of a free end (112) of the end portion (111) of the rope (110) is larger than a second opening cross section (202) of the receiving opening (102) at a range of the end portion (111) of the rope (110) laying opposite the free end (112) of the end portion (111).

5. Rope arrangement (100) according to one of the claims 1 to 4, further comprising
a bolt (103) which is arranged in such a manner that the bolt (103) is guided through the sleeve element (101) and through the end portion (111) of the rope (110).

6. Rope arrangement (100) according to one of the claims 1 to 5, further comprising
a wedge element which runs from a free end (112) of the end portion (111) along a rope centerline (113) of the rope (110) into the rope (110) in such a manner, that a widening of a diameter of the rope (110) is formed in a range of the end portion (111).

7. Rope arrangement (100) according to one of the claims 1 to 6,
wherein the adhesive (130) comprises a two-component adhesive and/or a resin.

8. Rope arrangement (100) according to one of the claims 1 to 7,
wherein the adhesive (130) comprises a thermically hardening adhesive.

9. Rope arrangement (100) according to one of the claims 1 to 8,
wherein the receiving opening (102) and the rope (110) are formed in such a manner, that between the end portion (111) of the rope (110) and the sleeve element (101) in the receiving opening (102) a gap is formed,
wherein the gap in particular comprises a distance between the end portion (111) and the sleeve element (101) of 0,2 mm to 0,5 mm.

10. Rope arrangement (100) according to one of the claims 1 to 9,
wherein the sleeve element (101) in the receiving opening (102) comprises a checkmark (104) indicating the filling quantity of the adhesive (130) in the receiving opening (102).

11. Rope arrangement (100) according to one of the claims 1 to 10,
wherein the sleeve element (101) comprises a first bore hole and a second bore hole,
wherein the first bore hole and the second bore hole are extending from the surrounding of the sleeve element (101) into the receiving opening (102), wherein the first bore hole and the second bore hole are spaced apart from each other,
wherein the first bore hole and the second bore hole are formed in such a manner, that a respective fixating element is pushable through the first bore hole and the second bore hole, such that the end portion (111) of the rope (110) is spatial fixable in a predetermined position inside of the receiving opening (102) between the respective fixating elements.

12. Rope arrangement (100) according to one of the claims 1 to 11,
wherein the end portion (111) of the rope (110) comprises a further checkmark (114) indicating the insertion depth of the end portion (111) into the receiving opening (102).

13. Rope arrangement (100) according to one of the claims 1 to 12,
wherein the roughened surface is a fluted or coated surface.

14. Method for manufacturing a rope arrangement (100), the method comprising
providing a sleeve element (101) with a receiving opening (102), wherein the sleeve element (101) in the receiving opening (102) comprises a roughened surface,
providing a rope (110) with an end portion (111),
wherein the end portion (111) is mechanically or chemically roughened,
Filling of the receiving opening (102) with an adhesive (130), and
Arranging the end portion (111) in the receiving opening (102) such that an adhesive joint between the rope (110) and the sleeve element (101) is produced,
wherein a materially and frictionally engaged connection is formed between the end portion (111) and the sleeve element (101) by the adhesive joint.

15. Method according to claim 14,
wherein the adhesive (130) comprises a thermically curing adhesive,
wherein the method further comprises
heating the end portion (111) in the receiving opening (102) such that the thermically hardening adhesive is harden.

## Revendications

1. Agencement de câble (100) pour sécuriser une personne, présentant
un élément de douille (101) avec une ouverture de réception (102),
un câble (110) avec une section d'extrémité (111),
où la section d'extrémité (111) est agencée dans l'ouverture de réception (102),
un adhésif (130) qui est agencé dans l'ouverture de réception (102) afin de mettre à disposition une liaison adhésive entre le câble (110) et l'élément de douille (101),
où l'élément de douille (101) présente une surface rendue rugueuse dans l'ouverture de réception (102),
**caractérisé en ce que** la section d'extrémité (111) est rendue rugueuse mécaniquement ou chimiquement, et
où une liaison de matière et par friction est réalisée entre la section d'extrémité (111) et l'élément de douille (101) au moyen de la liaison adhésive.

2. Agencement de câble (100) selon la revendication 1,
où l'ouverture de réception (102) présente un profil (203) cylindrique.

3. Agencement de câble (100) selon la revendication 1,
où l'ouverture de réception (102) présente un profil (203) conique.

4. Agencement de câble (100) selon la revendication 3,
où le profil (203) conique de l'ouverture de réception (102) est réalisé de telle manière qu'une première section transversale d'ouverture (201) de l'ouverture de réception (102) soit plus grande dans la zone d'une extrémité libre (112) de la section d'extrémité (111) du câble (110) qu'une seconde section transversale d'ouverture (202) de l'ouverture de réception (102) au niveau d'une zone de la section d'extrémité (111) du câble (110) se trouvant en face de l'extrémité libre (112) de la section d'extrémité (111).

5. Agencement de câble (100) selon l'une quelconque des revendications 1 à 4, présentant en outre
un boulon (103) qui est agencé de telle manière que le boulon (103) soit guidé au travers de l'élément de douille (101) et au travers de la section d'extrémité (111) du câble (110).

6. Agencement de câble (100) selon l'une quelconque des revendications 1 à 5, présentant en outre
un élément de coin qui s'étend d'une extrémité libre (112) de la section d'extrémité (111) le long d'une ligne médiane de câble (113) du câble (110) jusque dans le câble (110) de telle manière qu'un élargissement d'un diamètre du câble (110) soit réalisé dans une zone de la section d'extrémité (111).

7. Agencement de câble (100) selon l'une quelconque des revendications 1 à 6,
où l'adhésif (130) présente une colle à deux composants et/ou une résine.

8. Agencement de câble (100) selon l'une quelconque des revendications 1 à 7,
où l'adhésif (130) présente un adhésif durcissant thermiquement.

9. Agencement de câble (100) selon l'une quelconque des revendications 1 à 8,
où l'ouverture de réception (102) et le câble (110) sont réalisés de telle manière qu'entre la section d'extrémité (111) du câble (110) et l'élément de douille (101) dans l'ouverture de réception (102) soit réalisée une fente,
où la fente présente en particulier une distance entre la section d'extrémité (111) et l'élément de douille (101) de 0,2 à 0,5 mm.

10. Agencement de câble (100) selon l'une quelconque des revendications 1 à 9,
où l'élément de douille (101) présente, dans l'ouverture de réception (102), un marquage de contrôle (104) qui indique la quantité de remplissage de l'adhésif (130) dans l'ouverture de réception (102).

11. Agencement de câble (100) selon l'une quelconque des revendications 1 à 10,
où l'élément de douille (101) présente un premier perçage et un second perçage,
où le premier perçage et le second perçage s'étendent de l'environnement de l'élément de douille (101) dans l'ouverture de réception (102),
où le premier perçage et le second perçage sont espacés l'un de l'autre,
où le premier perçage et le second perçage sont réalisés de telle manière qu'à travers le premier perçage et le second perçage puisse être inséré respectivement un élément de fixation de sorte que la section d'extrémité (111) du câble (110) puisse être fixée spatialement dans une position prédéterminée dans l'ouverture de réception (102) entre les éléments de fixation respectifs.

12. Agencement de câble (100) selon l'une quelconque des revendications 1 à 11,
où la section d'extrémité (111) du câble (110) présente un autre marquage de contrôle (114) qui indique la profondeur d'insertion de la section d'extrémité (111) dans l'ouverture de réception (102).

13. Agencement de câble (100) selon l'une quelconque des revendications 1 à 12,
où la surface rendue rugueuse est une surface rainurée ou revêtue.

14. Procédé de fabrication d'un agencement de câble (100), le procédé présentant
la mise à disposition d'un élément de douille (101) avec une ouverture de réception (102),
où l'élément de douille (101) présente une surface rendue rugueuse dans l'ouverture de réception (102),
la mise à disposition d'un câble (110) avec une section d'extrémité (111),
où la section d'extrémité (111) est rendue rugueuse mécaniquement ou chimiquement,
le remplissage de l'ouverture de réception (102) avec un adhésif (130) et
l'agencement de la section d'extrémité (111) dans l'ouverture de réception (102) de sorte qu'une liaison adhésive soit générée entre le câble (110) et l'élément de douille (101),
où une liaison de matière et par friction est réalisée entre la section d'extrémité (111) et l'élément de douille (101) au moyen de la liaison adhésive.

15. Procédé selon la revendication 14,
où l'adhésif (130) présente un adhésif durcissant thermiquement,
où le procédé présente en outre
le réchauffement de la section d'extrémité (111) dans l'ouverture de réception (102) de sorte que l'adhésif durcissant thermiquement durcisse.
